# EUROPEAN PATENT SPECIFICATION

(11) **EP 1 697 091 B1**
(45) Date of publication and mention of the grant of the patent: **08.04.2009**
(21) Application number: 04809121.9
(22) Date of filing: 21.12.2004
(51) Int. Cl.: B25J 9/16, G05B 19/4067

(54) **CONTROL SYSTEM OF AN INDUSTRIAL ROBOT**
STEUERSYSTEM FÜR EINEN INDUSTRIEROBOTER
SYSTEME PERMETTANT DE COMMANDER UN ROBOT INDUSTRIEL

(30) Priority: 22.12.2003 SE 0303522
(43) Date of publication of application: 06.09.2006
(73) Proprietor: ABB AB, 721 83 Västerås (SE)
(72) Inventor: DAHLGREN, Roger, S-723 53 Väster s (SE); JOHANSSON, Sven-Erik, S-722 41 Väster s (SE)
(74) Representative: Reyier, Ann-Mari
(86) International application number: PCT/SE2004/001948
(87) International publication number: WO 2005/061187

(56) References cited:
- EP-A1- 0 118 988
- EP-A2- 0 673 726
- EP-A2- 1 083 484
- US-A- 4 525 780
- US-A- 5 307 504
- US-A- 5 784 613
- US-A- 5 793 635
- US-A1- 2002 192 909

## Description

### FIELD OF THE INVENTION

The present invention relates to a control system for an industrial robot. The control system comprises program storage for storage of a user program comprising one or more program routines including a series of robot program instructions written in a robot language, and a program executer adapted, when running the user program, to execute the stored robot program instructions. The invention further relates to a control system for an industrial robot.

### PRIOR ART

Before an industrial robot is to be put in operation for a certain task, it must be programmed to carry out the task. When programming an industrial robot, a robot language is used. There exist a plurality of different robot languages, since each robot supplier has developed its own robot language. The robot language is formed such that it is simple to use for the robot user, who may be a person without knowledge or experience of programming. A robot language may consist of two types of robot instructions; fixed robot instructions and shell instructions. The fixed robot instructions consist of calls to fixed routines, comprising a set of instructions written in a general high-level language. The shell instructions consist of calls to so-called shell routines, comprising a set of instructions written in the robot language. A shell routine can easily be created be the robot user. The concept of shell routines is described in more detail in the patent application EP0673726A2. A robot program may comprise calls to routines such as subroutines, functions, and shell routines, each written in a robot language and stored in the program storage. A function is a subroutine that always returns a value when called at.

A robot program comprises a series of robot instruction written in a robot language. Normally, a robot program comprises a main routine having a number of calls to subroutines, function and shell routines. The subroutines, functions and shell routines are written in the robot language. A robot language must be designed to handle interactive operations from the user. The robot user is for example the robot programmer or operator. During execution of the robot program a program counter, pointing at the program instruction being currently executed, is displayed to the user. Before the robot program is used it should be test run. During the test run, the user often has to interrupt the robot program, and restart it from another point in the program, for example restart it from the beginning of the main routine. Thus, for testing purpose and production management it must be possible to stop the program execution and move the program counter to the main routine or some other routine and restart the execution from that point. Also for automatic error recovery in the program, the execution and the program counter can be transferred to some other routine for continue of the execution.

For all these type of more and less unexpected move of the program counter without complete execution of the program routine, there is a need of cleaning up and resetting of allocated system or program resources. Example of things that need to be handled after an unexpected move of the program counter is reset of program variables, reset of modal program settings for robot movement such as velocity override, acceleration limitation, configuration supervision, program displacement, soft servo and servo tuning, reset of synchronized movement of several robots, close of open files and serial channels, unload of program modules, user interaction and cancel of subscription of interrupts for I/O, timer, execution error and variable change.

A problem is how to take care of these suddenly and unexpected move of the program counter and how to do the cleanup and reset. Today, when the program counter has unexpectedly been moved out of a program routine, the control system of the robot tries to foresee which recourses have been allocated and take care of the cleaning and resetting. However, this solution is not satisfying since the control system is not aware of all the systems and program resources allocated by the user's program. Consequently the control system cannot do all the necessary cleaning, resulting in that some recourses allocated by a partially executed or aborted routine remains allocated even after the routine is abandoned.

US5,784,613 discloses a computer system using threading, which allows multiple routines, denoted threads, to run simultaneously and to share resources. A thread may comprise a plurality of linked routines. The document describes a mechanism for handling a "thread cancel" which means that one of the simultaneously executed threads is interrupted during execution. For this purpose a clean up handler stack is provided for each of the simultaneously executed treads. The cleanup handler stack contains information, which typically includes pointers to one or more cleanup handler functions. A cleanup handler stack is a memory area having allocated portions that are linked together to form a stack structure. During execution of the threads, pointers to the cleanup functions are stored on the stack. The cleanup handler functions are invoked upon receipt of a "thread cancel". The cleanup handlers are normally invoked in LIFO order when a thread receives a cancel. The disclosed cleanup mechanism is adapted to be used for cleaning up after a thread cancel.

### OBJECTS AND SUMMARY OF THE INVENTION

The object of the present invention is to provide a control system for an industrial robot, which in an improved way takes care of the cleaning up after partially executed or aborted routines of a robot program.

This object is achieved by means of the initially defined control system, which is characterized in that it further comprises a cleanup executer for cleaning up after partially executed or aborted routines, wherein the cleanup executer is adapted to upon activation, determine whether the partially executed or aborted routine comprises a cleanup handler having a series of robot program instructions for cleaning up and/or resetting resources allocated by the routine, and if the routine comprises a cleanup handler, to execute the robot program instructions of the cleanup handler. The cleanup handler either comprises the program instructions for cleanup and/or reset or comprises a call to another routine comprising the program instructions for cleanup and/or resetting. The object of the cleanup handler is to cleanup remaining side effects after partially executed routines, e.g. canceling modal instructions, such as opening a file. A modal instruction is an instruction that performs a lasting adjustment of the system or the user program, for example sets one or more global parameters, functions or allocate external resources. A cleanup handler can access any variable or symbol reachable from the normal routine body, i. e. from the normal program code of the routine, including locally declared variables. For instance, the routine comprising the cleanup handler is a main routine, a subroutine, a shell routine or a function or any other routine.

The problem is solved by introducing a cleanup handler in the robot language. In the cleanup handler the programmer of the robot program can put robot instructions of any kind from the robot language. The robot instructions of the cleanup handler should typically perform clean-up actions, for instance closing a file. Upon activation of the cleanup executer, for example at an unexpected move of the program counter from the routine, the cleanup handler is executed and necessary cleanup and reset is done. Not all routines need to have a cleanup handler. It is optional to provide a routine with a cleanup handler or not. Thus, it is up to the programmer to decide whether a routine should have a cleanup handler or not. The cleanup handler belongs to the routine and is written in the robot language. Thanks to the fact that the cleanup handler is written by the robot programmer, who is aware of what the routine does and which resources is allocates, it possible to write in advance a cleanup handler that takes care of all the necessary cleanup.

The purpose of the cleanup functionality is to support automatic deactivation of modal instructions when aborting a routine, for example when moving the program counter out of the current routine. A cleanup handler is a list of instructions that are executed by the program executor on certain system events that leaves the routine only partly executed. An activation event is for example when the program counter is moved out of a routine.

A program routine can be aborted at any point by moving the program counter out of the routine. In some cases, when the program is executing certain sensitive routines, it is unsuitable to abort. Using the cleanup executer it is possible to protect such sensitive routines against unexpected program reset. With the cleanup executer it is possible to have certain code executed automatically if the routine is aborted.

It is advantageous to activate the cleanup executer upon an unexpected movement of the program counter. The cleanup handler is then executed before the program counter is moved. It is particularly advantageous to activate the cleanup executer upon receiving a move program counter command from the user, for instance if the user moves the program counter from a sub routine to the main routine. However, the cleanup executer is also activated if an exit-instruction is executed, causing the program to reset, if the program is reset for some other reason, for instance when changing some configuration, or if the program or any routine of the program is deleted. The cleanup executer should not be activated if the program returns as usual form the routine, for example if the program reaches the end of the routine or on a return statement.

According to an embodiment of the invention the program executer comprises means for locking the position of the user program counter during execution of the cleanup handler. The program counter shall be invisible for the user when executing a cleanup handler. This is achieved by locking the position of the user program counter. When the cleanup handler is executed the program counter remain in its old location, but is updated when the cleanup handler is finished. According to an embodiment of the invention each cleanup handler comprises a word reserved for identifying that it is a cleanup handler, and the cleanup executer is adapted to determine whether the currently executed routine includes a cleanup handler by determining whether the currently executed routine comprises said reserved word or not. According to the invention, the robot language is provided with a reserved word, i.e. a word not allowed to be used for any other purpose in the routine, for identifying that a procedure or routine comprises a cleanup handler. Having a reserved word in the cleanup handler makes it easy for the cleanup executer to identify if the routine has a cleanup handler or not.

According to an embodiment of the invention, the cleanup executer is adapted to determine whether said partially executed or aborted routine has been called at from a previously executed routine, to determine whether the previously executed routine comprises a cleanup handler and to execute the robot program instructions of the cleanup handler of the previously executed routine. Preferably, the cleanup executer is adapted to upon activation detect and run all cleanup handlers in all routines in a call-chain from a main routine to the partially executed or aborted routine. If the partially executed or aborted routine is a part of a chain of routine calls, the other routines of the call chain have also been invoked, but not yet terminated. According to this embodiment all cleanup handlers in the routines of the call-chain is executed when the cleanup executer is activated. Thus, all resources allocated by the program are cleaned up upon activation of the cleanup executer.

According to an embodiment of the invention the program executer is adapted to disregard any program instruction in the cleanup handler involving moving the robot. By not allowing any instructions causing movements of the robot, collisions are avoided and the security of the user is guaranteed.

Another object of the present invention is to provide an improved method for cleaning up after partially executed or aborted routines of a robot program for an industrial robot during running of the robot program. This object is achieved by the method of the invention as defined in claim 10.

This object is also achieved by a computer program directly loadable into the internal memory of the computer or a processor, comprising software code portions for performing the steps of the method according to the invention, when said program is run on a computer. The computer program product is provided either on a computer readable medium or through a network, such as the Internet.

The object is also achieved by a computer readable medium having a program recorded thereon, when the program is to make a computer perform the steps of the method according to the invention, and said program is run on the computer.

### BRIEF DESCRIPTION OF THE DRAWINGS

The invention will now be explained more closely by the description of different embodiments of the invention and with reference to the appended figures.
- Fig. 1: shows part of a control system according to the invention.
- Fig. 2: shows an example of a procedure of a robot program having a cleanup handler according to an embodiment of the invention.
- Fig. 3: shows an example of a call-chain of procedures, in which some of the procedures have a cleanup handler.
- Fig. 4: shows in the form of a flow diagram an example of how the cleanup executer cleans up partially executed routines.

### DETAILED DESCRIPTION OF PREFERRED EMBODIMENTS OF THE INVENTION

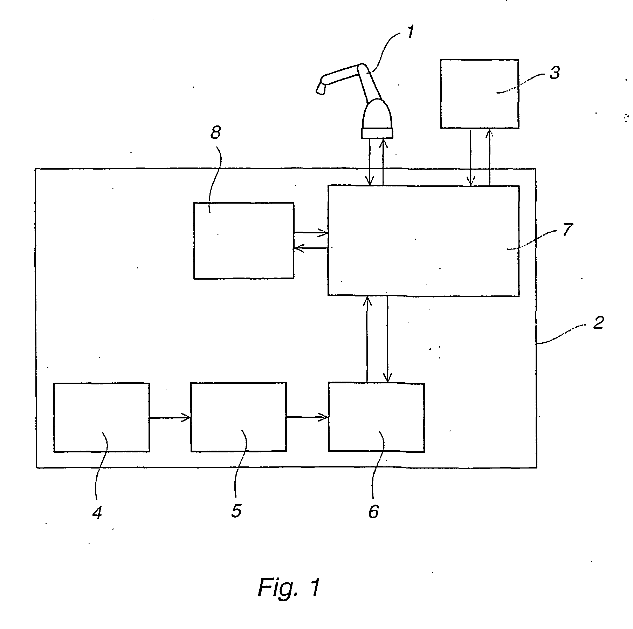

An industrial robot comprises a manipulator 1 and a control system 2 for controlling the movements of the manipulator. Fig. 1 shows a block scheme of those parts of the control system 2, which are of interest to the invention. During programming and testing of a robot program, the robot operator communicates with the control system 2 via a teach pendant 3. The operator inputs commands to the control system, for example, for starting and stopping the user program, for moving the program counter to another position of the user program and for restarting execution of the user program from the new position of the program counter. The control system 2 comprises a compiler 4 for compiling the robot program, a linker 5 for linking the robot program, a program storage 6 for storage of the robot program, and a program executor 7 for executing the robot program. The program executor 7 is also adapted to provide a program counter, pointing at the program instruction being currently executed.

The control system further comprises a cleanup executor 8 for cleaning up after partially executed or aborted routines. Preferably, the cleanup executor 8 is a part of the program executor 7. A user program comprises one or more program routines including a series of robot program instructions written in a robot language. The robot instructions may be of two types, fixed robot instructions or shell instructions. The shell instructions consist of calls to shell routines comprising a set of robot instructions. A shell routine is translated into an intermediate code by the compiler 4 and is stored in the program storage 6. In the same way, a user program is translated by the compiler and stored in the program storage. The program executor 7 then executes the user program. A robot program may comprise calls to routines such as subroutines, functions, and shell routines, each written in a robot language and stored in the program storage 6. A function is a subroutine that always returns a value when called at.

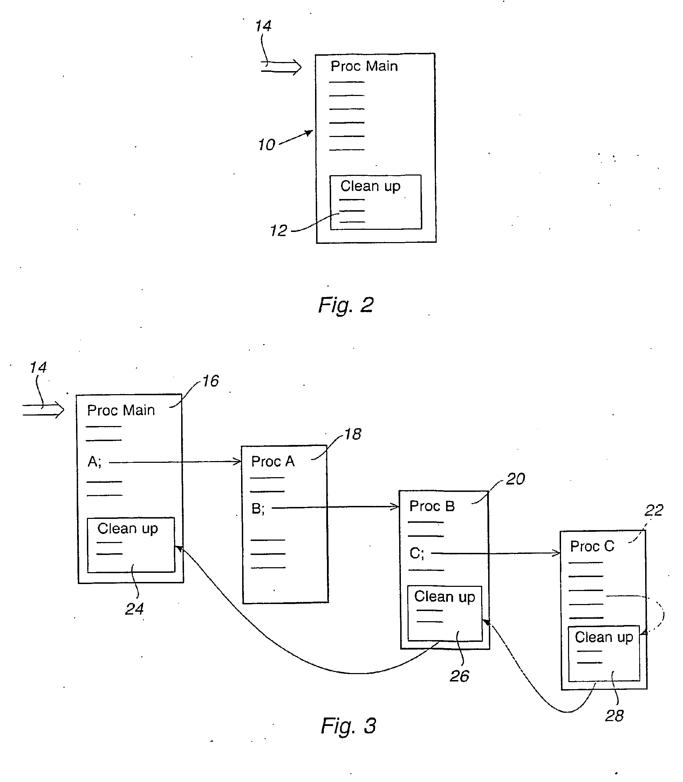

A cleanup handler is an optional part of a routine containing program instructions for performing cleanup actions. According to the invention, the robot language is provided with a reserved word, i.e. a word not allowed to be used for any other purpose in the routine, for identifying that a procedure or routine comprises a cleanup handler. Fig. 2 shows a robot program 10 having a cleanup handler 12. The cleanup handler 12 is located in the bottom of the program routine "Proc Main". The cleanup handler 12 comprises robot program instructions written by the robot programmer specifically for that routine. Thus, each cleanup routine is individually written to be adapted to the routine, to which it belongs. If the program counter is moved out of the routine, or if the routine is deleted, the cleanup handler is automatically executed.

A cleanup handler is not mandatory. Skipping it will result in.that no cleanup handler is executed for that routine. Supplying an empty cleanup handler, i.e. the body of the cleanup handler is empty, has the same meaning as skipping it entirely, no cleanup handler is executed for that routine.

The object of the cleanup handler is to cleanup remaining side effects after partially executed routines, e.g. canceling modal instructions, such as opening a file. A modal instruction is an instruction that performs a lasting adjustment of the system or the user program, for example sets one or more global parameters, functions or allocate external resources. A cleanup handler can access any variable or symbol reachable from the normal routine body, including locally declared variables. Most parts of the program language can be used in a cleanup handler, but there are some limitations, for example, motion instructions are not allowed. Accordingly, execution of a cleanup handler will not reset robot motions caused by the routine. Further, the cleanup handler is not allowed to contain instructions such as STOP, BREAK, RAISE, or RETURN. If an attempt is made to use any of these instructions, the instruction will be ignored and a warning will be generated. Since routine calls are allowed in a cleanup handler, the restrictions must also apply to routines called by the cleanup handler as well.

A cleanup handler is not mandatory. Skipping it will result in that no cleanup handler is executed for that routine. Supplying an empty cleanup handler, i.e. the body of the cleanup handler is empty, has the same meaning as skipping it entirely, no cleanup handler is executed for that routine.

The execution of a cleanup routine is always continuous. All break points are ignored when executing the cleanup handlers. It is not possible to step the cleanup handler. When the cleanup handler starts, the execution mode is automatically set to "continuous". After the cleanup session is finished, the previous execution mode is restored. If the program is stopped while executing a cleanup handler, the rest of the program instructions will not be executed. If there are additional cleanup handlers in the call chain that have not yet been executed, they will be ignored as well. This will result in a warning. It is not possible to move the program counter into a cleanup handler.

During normal execution of a routine, a program counter 14 is shown to the user. The program counter points at the instruction being currently executed. However, the program counter is not visible in a cleanup handler. When the cleanup handler is executed, the program counter remains at its previous location, but it is updated when the cleanup handler is finished. An EXIT instruction aborts the cleanup procedure in a similar way as a time-out error or a stop. The rest of the cleanup handlers in the call chain are ignored and the program counter is moved to the main routine.

Fig. 3 shows a chain of procedure calls. A main routine 16 has made a call to routine A, 18, which has made a call to routine B, 20, which has made a call to procedures C, 22. The main routine 16, routines B, and routine C is provided with cleanup handlers 24, 26, and 28. When the cleanup executer is activated, all the cleanup handlers in the call chain are executed. As disclosed in Fig. 3, the program counter 14 has unexpectedly been moved from routine C to the main routine 16. The cleanup handlers are processed in the same order, as the routines would have been returned. The cleanup handler closest to the end of the call chain, i.e. cleanup handler 28 of routine C will be executed first and the routine closest to the main procedure will be executed last. In this example, the main procedure comprises a cleanup handler 24 and this cleanup handler will be executed last in the chain. All cleanup handlers in the procedure call chain are executed from the bottom to the top.

The purpose of the cleanup functionality is to support automatic deactivation of modal instructions when aborting a routine, for example when moving the program counter out of the current routine. A cleanup handler is a list of instructions that are executed by the program executor on certain system events that leaves the routine only partly executed. An activation event is for example when the program counter is moved out of a routine. The cleanup handler is for example defined inside a routine and below the routine body. The cleanup handler has access to the variables declared in the routine encapsulating it. In order to execute the cleanup handler, an activation event has to occur.

If an exit statement is executed causing the program counter to be moved to the main routine, any cleanup handlers on the call chain back is to be executed. This is done by starting a cleanup session. It is possible to stop the execution of a cleanup session, but it is not possible to resume the cleanup session, if it has been stopped. If this happens, a warning is presented notifying the user of the only partially executed cleanup session. When starting the system again, the action that trigs the cleanup is to be immediately carried out, i.e. moving the program counter. If a time-out error occurs or the program executor is stopped while executing a cleanup session, the session is aborted. The current cleanup handler is aborted and no other cleanup handlers of routines on the call stack are to be executed.

If an error occurs when executing a cleanup session, any error handlers must be ignored. On error in a cleanup handler, the cleanup handler is terminated and considered consumed. A warning must be presented to the user. If the execution of a cleanup handler takes too much time, say more than a second or so, a man machine interface should present some sort of dialogue box to the user, so that the user will know what is going on.

All types of routines can have a cleanup handler. In this embodiment a keyword, for example, cleanup or undo, marks the start of the cleanup handler. The code of the cleanup handler will follow after the keyword. The end of the cleanup handler is the end statement of the routine, since the cleanup handler is the last item of the routine. The internal data structure of the program executor needs the introduction of three fields to support the cleanup: a statement list, an entry flag, and a source position pointer for storing the location of the cleanup handler.

The cleanup handler of a routine is called when the program counter is moved out of the current routine by user interaction or an exit instruction. To trig a cleanup handler by moving the program counter is only possible when the system is stopped and the user explicitly moves the program counter to a location outside the routine. Other events that reset the program executor will also trigger the cleanup, provided that the program counter is in a routine having a cleanup handler. A cleanup session is not started if the program reaches the end of the routine or a return statement and thus returns as usual from the routine.

A cleanup session is started by the activation of the cleanup executor. The cleanup executor is activated either upon calling on it with a start cleanup session command or upon execution of an exit instruction. The cleanup executor comprises an instruction control unit responsible for rejecting forbidden instructions. The instruction control unit is activated only when executing a cleanup session. Another necessary control is a cleanup session control. If a basic step is executed when the program counter is in the routine body and the cleanup state is finished, the corresponding cleanup handler is started. This situation occurs, when a cleanup handler is finished and has returned to its caller. A third control is the break point check, which makes sure that the program executor does not stop on a break point when executing a cleanup session.

After the execution of a cleanup handler is finished, the cleanup state is set to "finished" to indicate that the cleanup session is still active, but not executing a cleanup handler. If no more cleanup handlers exist in the call chain, the session is finished and the cleanup state is set to "new session". When a cleanup session is finished, the last cleanup handler has been executed or the session has been aborted, a special code is returned telling that a cleanup session is finished.

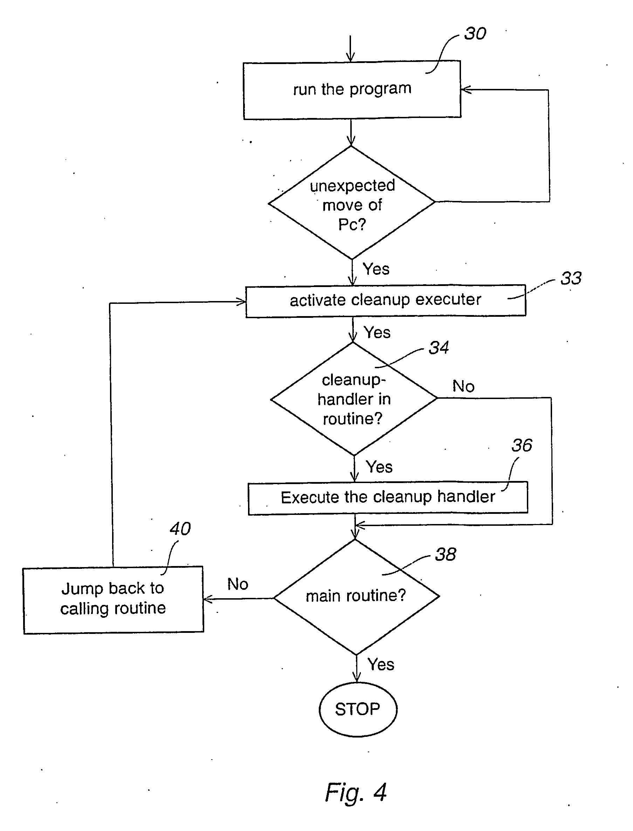

Fig. 4 is a flow chart illustration of the method and the computer program product according to an embodiment of the present invention. It will be understood that each block of the flow chart can be implemented by computer program instructions. In this embodiment, the cleanup executor is a part of the program executor. In block 30, the program executor runs the user program. If an unexpected move of the program counter occurs, or the program or a procedure of the program is deleted, block 32, the cleanup executor is activated and a cleanup session is started, block 33. The cleanup executor performs the following steps.

Upon activation the cleanup executor determines whether the interrupted or deleted routine comprises a cleanup handler. The cleanup executor determines whether the routine comprises a cleanup handler or not by determining whether the routine includes the keyword identifying that the program module is a cleanup handler, block 34. If the interrupted or deleted routine comprises a cleanup routine, the cleanup handler is executed, block 36. If the interrupted or deleted routine is the main routine of the program, and it has already been cleanup, the cleanup session is terminated, block 38. If the interrupted routine is not the main routine, the program executor steps back in the call chain to the preceding routine, block 40. The same procedure is repeated for the preceding routine, including executing the cleanup handler of the preceding routine, if there is any. This procedure is repeated for all the procedures in the call chain, until all the cleanup handlers of the call chain are executed and the main routine is reached and its cleanup handler has been executed. If any routine does not comprise a cleanup handler, block 34, and the routine is not the main routine, block 38, the cleanup executer steps to the preceding routine in the call chain, block 40.

The present invention is not limited to the embodiments disclosed but may be varied and modified within the scope of the following claims. For example in another embodiment the cleanup handler comprises a call to a subroutine comprising the cleanup instructions.

## Claims

1. A control system for an industrial robot, wherein the control system comprises:
- a program storage (6) for storage of a user program comprising one or more program routines including a series of robot program instructions written in a robot language, and
- a program executer (7) adapted, when running the user program, to execute the stored robot program instructions,
**characterized in that** the control system further comprises a cleanup executer (8) for cleaning up after partially executed or aborted routines, wherein the cleanup executer is adapted to upon activation, determine whether the partially executed or aborted routine comprises a cleanup handler having a series of robot program instructions for cleaning up and/or resetting resources allocated by the routine, and if the routine comprises a cleanup handler to execute the robot program instructions of the cleanup handler.

2. A control system according to claim 1, **characterized in that** the program executer (8) is adapted to provide a program counter (14), pointing at the program instruction being currently executed, that said cleanup executer is activated upon an unexpected movement of the program counter and that the cleanup executer is adapted to executing the cleanup handler before moving the program counter.

3. A control system according to claim 2, **characterized in that** the control system is adapted to receive and carry out user commands regarding stopping of the user program, moving the program counter to another position of the user program and restarting execution of the user program from the new position of the program counter, and that said cleanup executer is activated upon receiving said move program counter command from the user.

4. A control system according to any of the claims 2 and 3, **characterized in that** the program executer (8) comprises means for locking the position of the user program counter during execution of the cleanup handler.

5. A control system according to any of the previous claims, **characterized in that** each cleanup handler comprises a word reserved for identifying that it is a cleanup handler, and that said cleanup executer is adapted to determine whether the currently executed routine includes a cleanup handler by determining whether the currently executed routine comprises said reserved word or not.

6. A control system according to any of the previous claims, **characterized in that** said cleanup executer (8) is adapted to determine whether said partially executed or aborted routine has been called at from a previously executed routine, to determine whether the previously executed routine comprises a cleanup handler and to execute the robot program instructions of the cleanup handler of the previously executed routine.

7. A control system according to claim 6, **characterized in that** said cleanup executer (8) is adapted to upon activation detect and run all cleanup handlers in all routines in a call-chain from a main routine to said partially executed or aborted routine.

8. A. control system according to any of the previous claims, **characterized in that** said routine is any of a main routine, a subroutine, a shell routine and a function.

9. A control system according to any of the previous claims, **characterized in that** the program executer (8) is adapted to disregard any program instruction in the cleanup handler involving moving the robot.

10. A method for controlling an industrial robot, wherein the method comprises
- storing a user program comprising one or more program routines including a series of robot program instructions written in a robot language,
- running the user program by executing the stored robot program instructions,
- receiving information about that there is a partially executed or aborted routine,
**characterised in that** it further comprises:
- starting a cleanup session comprising: determining whether the partially executed or aborted routine comprises a cleanup handler comprising a series of robot program instructions for cleaning up and/or resetting resources being allocated by the routine currently executed, and if the routine comprises a cleanup handler executing the robot program instructions of the cleanup handler.

11. A method according to claim 10, **characterized in that** there is a program counter pointing at the program instruction being currently executed in the user program, and that said receiving of information comprises receiving an unexpected command for moving the program counter to new position of the user program, and the cleanup handler is executed before moving the program counter to the new position.

12. A method according to claim 11, **characterized in that** said unexpected command is a move program counter command received from a user and that the method further comprises restarting the execution from the new position of the program counter.

13. A method according to any of the claims 11 and 12, **characterized in that** the program counter is locked during execution of the cleanup handler.

14. A method according to any of the claims 10 - 13, **characterized in that** each cleanup handler comprises a word reserved for identifying that it is a cleanup handler, and that the determining whether the routine being currently executed comprises a cleanup handler comprises determining whether the routine being currently executed comprise said reserved word or not.

15. A method according to any of the claims 10-14, **characterized in that** it comprises disregarding any program instruction in the cleanup handler involving moving the robot.

16. A method according to any of the claims 10-15, **characterized in that** it comprises determining whether the partially executed or aborted routine is called at from a previously executed routine, determining whether the previously executed routine comprises a cleanup handler and executing the robot program instructions of the cleanup handler of the previously executed routine.

17. A method according to claim 16, **characterized in that** it comprises detecting and running all cleanup handlers in all routines in a call-chain from a main routine to said partially executed or aborted routine.

18. A method according to any of the claims 10-17, **characterized in that** said routine is any of a main routine, a subroutine, a shell routine or a function.

19. A computer program comprising program instructions which, when loaded into a computer, causes the computer to perform the process of any of the claims 10 - 18.

20. A computer readable medium having a program recorded thereon, where the program is to make a computer perform the steps of any of the claims 10-18, when said program is run on the computer.

## Patentansprüche

1. Steuerungssystem für einen Industrieroboter, wobei das Steuerungssystem aufweist:
- einen Programmspeicher (6) zum Speichern eines Anwenderprogramms, der ein oder mehrere Programmabläufe umfasst, einschließlich einer Reihe von Roboterprogrammbefehlen, die in einer Robotersprache geschrieben sind, und
- eine Programmausführung (7), die dazu geeignet ist, die gespeicherten Roboterprogrammbefehle auszuführen, während das Anwenderprogramm läuft
**dadurch gekennzeichnet, dass** das Steuerungssystem ferner eine Löschungsroutine (8) zum Löschen teilweise ausgeführter oder abgebrochener Routinen beinhaltet, wobei die Löschungsroutine dazu geeignet ist, bei Aktivierung festzustellen, ob die teilweise ausgeführte oder abgebrochene Routine ein Löschungsprogramm mit einer Reihe von Roboterprogrammbefehlen zum Löschen und/oder Rücksetzen der Ressourcen besitzt, die durch die Routine zugewiesen wurde, um festzustellen, ob die Routine ein Löschungsprogramm umfasst, welches die Roboterprogrammbefehle des Löschungsprogramms ausführt.

2. Steuerungssystem nach Anspruch 1, **dadurch gekennzeichnet, dass** die Programmausführung (7) dazu geeignet ist, einen Programmzähler (14) vorzusehen, der auf den aktuell ausgeführten Programmbefehl zeigt, dass die Löschungsroutine bei einer unerwarteten Bewegung des Programmzählers aktiviert wird, und dass die Löschungsroutine dazu geeignet ist, das Löschungsprogramm durchzuführen, bevor der Programmzähler bewegt wird.

3. Steuerungssystem nach Anspruch 2, **dadurch gekennzeichnet, dass** das Steuerungssystem dazu geeignet ist, Anwenderbefehle bezüglich des Anhaltens des Anwenderprogramms, des Bewegens des Programmzählers an eine andere Position des Anwenderprogramms und des erneuten Startens der Ausführung des Anwenderprogramms von der neuen Position des Programmzählers zu empfangen und auszuführen, und dass die Löschungsroutine aktiviert wird, wenn sie den Befehl zum Bewegen des Programmzählers von dem Anwender empfängt.

4. Steuerungssystem nach einem der Ansprüche 2 und 3, **dadurch gekennzeichnet, dass** die Programmausführung (7) ein Mittel zum Sperren der Position des Anwenderprogrammzählers während der Ausführung des Löschungsprogramms aufweist.

5. Steuerungssystem nach einem der vorhergehenden Ansprüche, **dadurch gekennzeichnet, dass** jedes Löschungsprogramm ein Wort aufweist, das reserviert ist, um zu erkennen, dass es sich um ein Löschungsprogramm handelt und dass die Löschungsroutine dazu geeignet ist, festzustellen, ob die aktuell ausgeführte Routine ein Löschungsprogramm einschließt, durch Feststellung, ob die aktuell ausgeführte Routine das reservierte Wort aufweist oder nicht.

6. Steuerungssystem nach einem der vorhergehenden Ansprüche, **dadurch gekennzeichnet, dass** die Säuberungsausführung (8) dazu geeignet ist, festzustellen, ob die teilweise ausgeführte oder abgebrochene Routine von einer zuvor ausgeführten Routine aufgerufen wurde, und/oder festzustellen, ob die zuvor ausgeführte Routine ein Löschungsprogramm aufweist und die Roboterprogrammbefehle des Löschungsprogramms der zuvor ausgeführten Routine ausgeführt werden.

7. Steuerungssystem nach Anspruch 6, **dadurch gekennzeichnet, dass** die Löschungsroutine (8) dazu geeignet ist, bei Aktivierung alle Löschungsprogramme in allen Routinen in einer Aufrufkette von einer Hauptroutine zur teilweise ausgeführten oder abgebrochenen Routine zu erkennen und ablaufen zu lassen.

8. Steuerungssystem nach einem der vorhergehenden Ansprüche, **dadurch gekennzeichnet, dass** die Routine ein Programm ist, ausgewählt aus einer Hauptroutine, einer Subroutine, einer Shellroutine und einer Funktion.

9. Steuerungssystem nach einem der vorhergehenden Ansprüche, **dadurch gekennzeichnet, dass** die Programmausführung (8) dazu geeignet ist, jeden Programmbefehl in dem Löschungsprogramm, der mit der Bewegung des Roboters in Verbindung steht, zu ignorieren.

10. Verfahren zum Steuern eines Industrieroboters, wobei das Verfahren aufweist:
- Speichern eines Anwenderprogramms, aufweisend eine oder mehrere Programmroutinen, einschließend eine Reihe von Roboterprogrammbefehlen, die in einer Robotersprache geschrieben sind,
- Ablaufen lassen des Anwenderprogramms durch Ausführen der gespeicherten Roboterprogrammbefehle,
- Empfangen von Informationen darüber, ob eine teilweise ausgeführte oder abgebrochene Routine vorliegt,
**dadurch gekennzeichnet, dass** beim Starten einer Löschungssitzung festgestellt wird, ob die teilweise ausgeführte oder abgebrochene Routine ein Löschungsprogramm aufweist, das eine Reihe von Roboterprogrammbefehlen zum Säubern und/oder Rücksetzen von durch die aktuell ausgeführte Routine zugeordneten Ressourcen aufweist, und wenn die Routine ein Löschungsprogramm aufweist, die Roboterprogrammbefehle des Löschungsprogramms ausgeführt werden.

11. Verfahren nach Anspruch 10, **dadurch gekennzeichnet, dass** ein Programmzähler vorhanden ist, der auf den aktuell in dem Anwenderprogramm ausgeführten Programmbefehl zeigt, und dass der Empfang von Informationen den Empfang eines unerwarteten Befehls zum Bewegen des Programmzählers an eine neue Position des Anwenderprogramms feststellt, und das Löschungsprogramm vor Bewegen des Programmzählers an die neue Position ausgeführt wird.

12. Verfahren nach Anspruch 11, **dadurch gekennzeichnet, dass** der unerwartete Befehl ein Befehl zum Bewegen des Programmzählers ist, der von einem Anwender empfangen wird, und dass das Verfahren ferner das erneute Starten der Ausführung von der neuen Position des Programmzählers umfasst.

13. Verfahren nach einem der Ansprüche 11 und 12, **dadurch gekennzeichnet, dass** der Programmzähler während der Ausführung des Löschungsprogramms gesperrt ist.

14. Verfahren nach einem der Ansprüche 10 bis 13, **dadurch gekennzeichnet, dass** jedes Löschungsprogramm ein Wort aufweist, das reserviert ist, um zu erkennen, dass es sich um ein Löschungsprogramm handelt, und dass eine Feststellung erfolgt, ob die aktuell ausgeführte Routine ein Löschungsprogramm aufweist und/oder die aktuell ausgeführte Routine das reservierte Wort aufweist oder nicht.

15. Verfahren nach einem der Ansprüche 10 bis 14, **dadurch gekennzeichnet, dass** eine Ignorierung jedes Programmbefehls in dem Löschungsprogramm erfolgt, der mit der Bewegung des Roboters in Verbindung steht.

16. Verfahren nach einem der Ansprüche 10 bis 15, **dadurch gekennzeichnet, dass** die Feststellung, ob die teilweise ausgeführte oder abgebrochene Routine von einer zuvor ausgeführten Routine aufgerufen wird und/oder die zuvor ausgeführte Routine ein Löschungsprogramm aufweist und die Ausführung der Roboterprogrammbefehle des Löschungsprogramms der zuvor ausgeführten Routine erfolgt.

17. Verfahren nach Anspruch 16, **dadurch gekennzeichnet, dass** es die Erkennung und der Ablaufen lassen aller Löschungsprogramme in allen Routinen in einer Aufrukette von einer Hauptroutine zur teilweise ausgeführten oder abgebrochenen Routine erfolgt.

18. Verfahren nach einem der Ansprüche 10 bis 17, **dadurch gekennzeichnet, dass** die Routine ein Programm ist, ausgewählt aus einer Hauptroutine, einer Subroutine, einer Shellroutine oder einer Funktion.

19. Computerprogramm, aufweisend Programmbefehle, die, wenn sie auf einen Computer geladen werden, den Computer veranlassen, das Verfahren nach einem der Ansprüche 10 bis 18 durchzuführen.

20. Maschinenlesbares Medium auf dem ein Programm aufgezeichnet ist, wobei das Programm dazu vorgesehen ist, einen Computer zu veranlassen, die Schritte von einem der Ansprüche 10 bis 18 durchzuführen, wenn das Programm auf dem Computer ausgeführt wird.

## Revendications

1. Système de commande pour un robot industriel, le système de commande comprenant :
- une mémoire de programme (6) pour stocker un programme d'utilisateur comprenant une ou plusieurs routines de programme comprenant une série d'instructions de programme de robot écrites dans un langage robot ; et
- un exécuteur de programme (7) apte, lorsqu'il exécute le programme d'utilisateur, à exécuter les instructions de programme de robot stockées,
**caractérisé par le fait que** le système de commande comprend en outre un exécuteur de nettoyage (8) pour nettoyer après des routines partiellement exécutées ou abandonnées, l'exécuteur de nettoyage étant apte, une fois activé, à déterminer si ou non la routine partiellement exécutée ou abandonnée comprend un gestionnaire de nettoyage ayant une série d'instructions de programme de robot pour nettoyer et/ou réinitialiser des ressources allouées par la routine, et, si la routine comprend un gestionnaire de nettoyage, à exécuter les instructions de programme de robot du gestionnaire de nettoyage.

2. Système de commande selon la revendication 1, **caractérisé par le fait que** l'exécuteur de programme (7) est apte à fournir un compteur de programme (14) pointant sur l'instruction de programme actuellement en cours d'exécution, **par le fait que** ledit exécuteur de nettoyage est activé lors d'un déplacement inattendu du compteur de programme, et **par le fait que** l'exécuteur de nettoyage est apte à exécuter le gestionnaire de nettoyage avant de déplacer le compteur de programme.

3. Système de commande selon la revendication 2, **caractérisé par le fait que**, le système de commande est apte à recevoir et à réaliser des commandes d'utilisateur concernant l'arrêt du programme d'utilisateur, déplaçant le compteur de programme à une autre position du programme d'utilisateur et redémarrant l'exécution du programme d'utilisateur à partir de la nouvelle position du compteur de programme, et **par le fait que** ledit exécuteur de nettoyage est activé lors de la réception de ladite commande de déplacement de compteur de programme de l'utilisateur.

4. Système de commande selon l'une quelconque des revendications 2 et 3, **caractérisé par le fait que** l'exécuteur de programme (7) comprend des moyens pour verrouiller la position du compteur de programme d'utilisateur pendant l'exécution du gestionnaire de nettoyage.

5. Système de commande selon l'une quelconque des revendications précédentes, **caractérisé par le fait que** chaque gestionnaire de nettoyage comprend un mot réservé pour identifier qu'il s'agit d'un gestionnaire de nettoyage, et **par le fait que** ledit exécuteur de nettoyage est apte à déterminer si ou non la routine actuellement exécutée comprend un gestionnaire de nettoyage par détermination du point de savoir si ou non la routine actuellement exécutée comprend ledit mot réservé.

6. Système de commande selon l'une quelconque des revendications précédentes, **caractérisé par le fait que** ledit exécuteur de nettoyage (8) est apte à déterminer si ou non ladite routine partiellement exécutée ou abandonnée a été appelée par une routine précédemment exécutée, à déterminer si ou non la routine précédemment exécutée comprend un gestionnaire de nettoyage et à exécuter les instructions de programme de robot du gestionnaire de nettoyage de la routine précédemment exécutée.

7. Système de commande selon la revendication 6, **caractérisé par le fait que** ledit exécuteur de nettoyage (8) est apte, lorsqu'il est activé, à détecter et à exécuter tous les gestionnaires de nettoyage de toutes les routines dans une chaîne d'appels d'une routine principale à ladite routine partiellement exécutée ou abandonnée.

8. Système de commande selon l'une quelconque des revendications précédentes, **caractérisé par le fait que** ladite routine est l'une quelconque d'une routine principale, d'une sous-routine, d'une routine de système essentiel et d'une fonction.

9. Système de commande selon l'une quelconque des revendications précédentes, **caractérisé par le fait que** l'exécuteur de programme (7) est apte à ignorer toute instruction de programme dans le gestionnaire de nettoyage impliquant le déplacement du robot.

10. Procédé de commande d'un robot industriel, le procédé comprenant :
- le stockage d'un programme d'utilisateur comprenant une ou plusieurs routines de programme comprenant une série d'instructions de programme de robot écrites en langage robot ;
- l'exécution du programme d'utilisateur par exécution des instructions de programme de robot stockées ;
- la réception d'informations indiquant qu'il y a une routine partiellement exécutée ou abandonnée,
**caractérisé par le fait qu'**il comprend, en outre :
- le démarrage d'une session de nettoyage comprenant les étapes consistant à : déterminer si ou non la routine partiellement exécutée ou abandonnée comprend un gestionnaire de nettoyage comprenant une série d'instructions de programme de robot pour nettoyer et/ou réinitialiser des ressources allouées par la routine actuellement exécutée, et, si la routine comprend un gestionnaire de nettoyage, exécuter les instructions de programme de robot du gestionnaire de nettoyage.

11. Procédé selon la revendication 10, **caractérisé par le fait qu'**il y a un compteur de programme pointant sur l'instruction de programme actuellement en cours d'exécution dans le programme d'utilisateur, et **par le fait que** ladite réception d'informations comprend la réception d'une commande inattendue pour déplacer le compteur de programme à une nouvelle position du programme d'utilisateur, et que le gestionnaire de nettoyage est exécuté avant de déplacer le compteur de programme à la nouvelle position.

12. Procédé selon la revendication 11, **caractérisé par le fait que** ladite commande inattendue est une commande de déplacement de compteur de programme reçue d'un utilisateur et **par le fait que** le procédé comprend en outre le redémarrage de l'exécution à partir de la nouvelle position du compteur de programme.

13. Procédé selon l'une quelconque des revendications 11 et 12, **caractérisé par le fait que** le compteur de programme est verrouillé pendant l'exécution du gestionnaire de nettoyage.

14. Procédé selon l'une quelconque des revendications 10 - 13, **caractérisé par le fait que** chaque gestionnaire de nettoyage comprend un mot réservé pour identifier qu'il s'agit d'un gestionnaire de nettoyage, et **par le fait que** la détermination du point de savoir si ou non la routine actuellement en cours d'exécution comprend un gestionnaire de nettoyage comprend la détermination du point de savoir si ou non la routine actuellement en cours d'exécution comprend ledit mot réservé.

15. Procédé selon l'une quelconque des revendications 10 - 14, **caractérisé par le fait qu'**il comprend l'étape consistant à ignorer toute instruction de programme dans le gestionnaire de nettoyage impliquant le déplacement du robot.

16. Procédé selon l'une quelconque des revendications 10 - 15, **caractérisé par le fait qu'**il comprend les étapes consistant à déterminer si ou non la routine partiellement exécutée ou abandonnée est appelée par une routine précédemment exécutée, déterminer si ou non la routine précédemment exécutée comprend un gestionnaire de nettoyage et exécuter les instructions de programme de robot du gestionnaire de nettoyage de la routine précédemment exécutée.

17. Procédé selon la revendication 16, **caractérisé par le fait qu'**il comprend la détection et l'exécution de tous les gestionnaires de nettoyage dans toutes les routines dans une chaîne d'appels d'une routine principale à ladite routine partiellement exécutée ou abandonnée.

18. Procédé selon l'une quelconque des revendications 10 - 17, **caractérisé par le fait que** ladite routine est l'une quelconque d'une routine principale, d'une sous-routine, d'une routine de système essentiel ou d'une fonction.

19. Programme informatique comprenant des instructions de programme qui, lorsqu'il est chargé dans un ordinateur, amène l'ordinateur à effectuer le procédé de l'une quelconque des revendications 10 - 18.

20. Support apte à être lu par ordinateur ayant un programme enregistré sur celui-ci, le programme consistant à amener l'ordinateur à effectuer les étapes de l'une quelconque des revendications 10 - 18, lorsque ledit programme est exécuté sur l'ordinateur.
